# EUROPÄISCHE PATENTSCHRIFT

(11) **EP 1 985 356 B1**
(45) Veröffentlichungstag und Bekanntmachung des Hinweises auf die Patenterteilung: **20.06.2012**
(21) Anmeldenummer: 08154082.5
(22) Anmeldetag: 04.04.2008
(51) Int. Cl.: B01F 3/02, B01F 5/04, B01F 5/06, B21D 53/00, F01N 3/20

(54) **Misch- und/oder Verdampfungseinrichtung**
Mixing and/or vaporisation device
Dispositif de mélange et/ou d'évaporation

(30) Priorität: 25.04.2007 DE 102007019878
(43) Veröffentlichungstag der Anmeldung: 29.10.2008
(73) Patentinhaber: J. Eberspächer GmbH & Co. KG, 73730 Esslingen (DE)
(72) Erfinder: WIRTH, Georg, 73230, Kirchheim/Teck (DE)
(74) Vertreter: BRP Renaud & Partner

(56) Entgegenhaltungen:
- EP-A- 1 657 414
- EP-A- 1 835 139
- EP-A- 1 953 359
- WO-A-97/35107
- DE-A1- 10 239 417
- FR-A- 2 384 206
- US-A- 4 515 138
- US-A- 4 929 088
- US-A1- 2003 226 539
- US-B1- 6 431 528
- US-B1- 6 536 420

## Beschreibung

Die vorliegende Erfindung betrifft eine Misch- und/oder Verdampfungseinrichtung für eine Abgasanlage einer Brennkraftmaschine, insbesondere in einem Kraftfahrzeug, mit den Merkmalen des Oberbegriffs des Anspruchs 1.

Bei Abgasanlagen von Brennkraftmaschinen kann es aus unterschiedlichen Gründen erforderlich sein, ein flüssiges Edukt in den Abgasstrom einzudüsen. Beispielsweise kann Kraftstoff stromauf eines Oxidationskatalysators in den Abgasstrom eingespritzt werden, um an einem stromab nachfolgenden Oxidationskatalysator eine exotherme Verbrennungsreaktion auszulösen. Ebenso kann beispielsweise ein Reduktionsmittel, wie z.B. Ammoniak, in den Abgasstrom eingespritzt werden, um in einem nachfolgend angeordneten SCR-Katalysator vom Abgas mitgeführte Stickoxide zu reduzieren. Anstelle von Ammoniak kann auch Harnstoff bzw. eine wässrige Harnstofflösung in den Abgasstrom eingespritzt werden. Durch eine Hydrolysereaktion entstehen aus der Harnstoff-Wasser-Lösung dann Ammoniak und Wasser. Ferner kann ein Kraftstoff oder ein anderes geeignetes Reduktionsmittel stromauf eines NOX-Speicherkatalysators in die Abgasströmung eingespritzt werden, um den NOX-Speicherkatalysator zu regenerieren.

Um die Wirkungsweise des in flüssiger Form in den Abgasstrang eingespritzten Edukts zu verbessern bzw. zu ermöglichen, ist eine weitgehende Verdampfung ebenso erstrebenswert wie eine intensive Durchmischung mit dem Abgas, um so ein möglichst homogenes Abgas-Edukt-Gemisch zu erhalten. Hierzu kann die Abgasanlage mit einer im Abgasstrang stromab der Einspritzeinrichtung angeordneten Misch- und/oder Verdampfungseinrichtung ausgestattet sein.

Je nach verwendeter Einspritzeinrichtung kann das Edukt in Form eines Flüssigkeitsstrahls eingebracht werden, der sich kegelförmig aufweitet. Bei niedrigen Motorlasten und Abgastemperaturen herrschen niedrige Abgastemperaturen und geringe Strömungsgeschwindigkeiten. In der Folge kann der Flüssigkeitsstrahl auf eine entsprechende Struktur der Misch-und/oder Verdampfungseinrichtung auftreffen. Je nach Ausgestaltung der Misch- und/oder Verdampfungseinrichtung kann der Flüssigkeitsstrahl zumindest teilweise die jeweilige Struktur der Misch- und/oder Verdampfungseinrichtung ungehindert durchdringen und dann in flüssiger Form zu einer Abgasbehandlungseinrichtung gelangen, bei der an sich die eingedüste Flüssigkeit nur in Form eines möglichst homogenen Gasgemischs ankommen soll. Eine reduzierte Wirkungsweise sowie die Gefahr von Beschädigungen sind die Folge.

Eine Misch- und/oder Verdampfungseinrichtung entsprechend dem Oberbegriff des Anspruchs 1 ist beispielsweise aus der US 6,431,528 B1 bekannt. Sie umfasst einen Rohrkörper, an dessen einen axialen Ende mehrere, in Umfangsrichtung zueinander benachbarte Schaufeln angeordnet sind, die radial nach innen vorstehen und dabei eine zentrale Durchgangsöffnung freilassen. Weiter sind die Schaufeln gegenüber der Axialrichtung angestellt und überlappen sich in Umfangsrichtung derart, dass eine die zentrale Durchgangsöffnung einschließende, in Axialrichtung blickdichte Ringfläche entsteht.

Aus der US 6,536,420 B1 ist eine andere Misch- und/oder Verdampfungseinrichtung bekannt, bei welcher der Rohrkörper zusammen mit den Schaufeln aus einem einzigen Blechkörper durch Umformen hergestellt ist.

Weitere Misch- und/oder Verdampfungseinrichtungen sind beispielsweise aus der DE 102 394 17 A1, aus der US 4,929,088, aus der US 4,515,138, aus der US 2003/0226539 A1, aus der FR 2,384,206, aus der EP 1,953,359 A1, aus der EP 1 835 139 A2 und aus der WO 97/35107 A1 bekannt.

Die vorliegende Erfindung beschäftigt sich mit dem Problem, für eine Misch- und/oder Verdampfungseinrichtung bzw. eine damit ausgestattete Abgasanlage bzw. für ein zugehöriges Herstellungsverfahren eine verbesserte Ausführungsform anzugeben, die sich insbesondere durch eine preiswerte Herstellbarkeit auszeichnet. Zusätzlich kann eine verbesserte Verdampfungswirkung erwünscht sein.

Dieses Problem wird erfindungsgemäß durch den Gegenstand des unabhängigen Anspruchs 1 gelöst. Vorteilhafte Ausführungs-formen sind Gegenstand der abhängigen Ansprüche.

Die Erfindung beruht auf dem allgemeinen Gedanken, die Misch- und/oder Verdampfungseinrichtung aus nur einem einzigen Blechkörper herzustellen, an dem hierzu ein Rohrkörper und davon radial nach innen abstehende Schaufeln ausgebildet werden. Hierdurch lässt sich die Misch- und/oder Verdampfungseinrichtung vergleichsweise preiswert herstellen. Erfindungsgemäß sind die Schaufeln gezielt so angeordnet und ausgestaltet, dass sie eine zentrale Durchgangsöffnung freilassen und gegenüber einer Axialrichtung des Rohrkörpers angestellt sind. Hierdurch wird im Bereich der Schaufeln der Strömungswiderstand erhöht und ein Drall erzeugt, während gleichzeitig in der zentralen Durchgangsöffnung der Druck abgesenkt wird. Hierdurch kann eine Beschleunigung der Abgasströmung im Zentrum erzeugt werden. Die erhöhte Strömungsgeschwindigkeit im Zentrum begünstigt die Verdampfung des Flüssigkeitsstrahls. Besonders vorteilhaft ist es dabei, den Flüssigkeitsstrahl so auszurichten, dass er radial außerhalb der zentralen Durchgangsöffnung auf die Schaufeln trifft. Besonders vorteilhaft ist dabei die erfindungsgemäße Ausgestaltung, bei welcher der für das Auftreffen des Flüssigkeitsstrahls vorgesehene Bereich der Schaufeln in axialer Richtung blickdicht ausgestaltet ist. Die Schaufeln sind hierzu so ausgestaltet und angeordnet, dass sie sich in Umfangsrichtung gegenseitig überlappen, um den gewünschten blickdichten Bereich zur Beaufschlagung mit dem Flüssigkeitsstrahl zu erhalten.

Bei der erfindungsgemäßen Misch- und/oder Verdampfungseinrichtung sind die Schaufeln so angeordnet und ausgestaltet, dass sie eine blickdichte Ringfläche ergibt, die sich radial bis zum Ringkörper erstreckt, wobei die Schaufeln radial außen am Übergang zum Rohrkörper mit ihrem Profil jeweils in einer Ebene liegen, die sich senkrecht zur Axialrichtung erstreckt. Hierdurch wird zum Einen eine vergleichweise große Fläche zur Beaufschlagung mit dem Flüssigkeitsstrahl bereitgestellt, während zum Anderen die Erhöhung der Strömungsgeschwindigkeit im Zentrum unterstützt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage,
- Fig. 2: eine Axialansicht einer erfindungsgemäßen Misch- und/oder Verdampfungseinrichtung,
- Fig. 3: eine Axialansicht wie in Fig. 2, jedoch in der entgegengesetzten Blickrichtung,
- Fig. 4: eine perspektivische Ansicht der in den Fig. 2 und 3 gezeigten Misch- und/oder Verdampfungseinrichtung,
- Fig. 5a: eine Ansicht wie in Fig. 2, jedoch bei einer anderen Ausführungsform, die nicht Teil der Erfindung ist,
- Fig. 5b: eine Ansicht wie in Fig. 5a, jedoch mit einer symbolisch angedeuteten Ringfläche,
- Fig. 6a: eine Ansicht wie in Fig. 3, jedoch bei der Ausführungsform gemäß Fig. 5a,
- Fig. 6b: eine Ansicht wie in Fig. 6a, jedoch mit einer symbolisch dargestellten Ringfläche,
- Fig. 7: eine perspektivische Ansicht auf die Misch- und/oder Verdampfungseinrichtung der Fig. 5 und 6,
- Fig. 8a bis 8g: Ansichten eines Blechkörpers bei verschiedenen Zuständen im Rahmen der Herstellung einer Misch- und/oder Verdampfungseinrichtung gemäß den Fig. 2 bis 4,
- Fig. 9a bis 9d: Ansichten eines Blechkörpers bei verschiedenen Herstellungsstufen einer Mischund/oder Verdampfungseinrichtung gemäß den Fig. 5 bis 7.

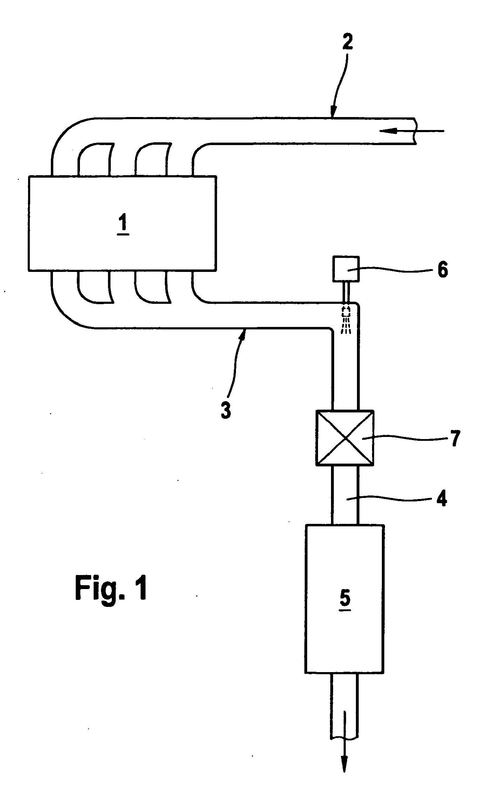

Entsprechend Fig. 1 weist eine Brennkraftmaschine 1, die beispielsweise in einem Kraftfahrzeug angeordnet sein kann, zur Versorgung mit Frischgas, vorzugsweise Luft, eine Frischgasanlage 2 und zum Abführen von Abgas eine Abgasanlage 3 auf. Eine derartige Abgasanlage 3 umfasst einen Abgasstrang 4, der im Betrieb der Brennkraftmaschine 1 das dort entstehende Abgas von der Brennkraftmaschine 1 abführt. Die Abgasanlage 3 kann zumindest eine Abgasbehandlungseinrichtung 5 aufweisen, die im Abgasstrang 4 angeordnet ist. Bei dieser Abgasbehandlungseinrichtung 5 kann es sich z.B. um einen Oxidationskatalysator, um einen NOX-Speicherkatalysator, um einen Hydrolysereaktor, um einen SCR-Katalysator oder um ein Partikelfilter handeln. Ebenso können einzelne oder mehrere der genannten Einrichtungen in einem gemeinsamen Gehäuse, insbesondere in Verbindung mit einem Schalldämpfer untergebracht sein. Ferner weist die Abgasanlage 3 eine Einspritzeinrichtung 6 auf, die dazu ausgestaltet ist, ein flüssiges Edukt in den Abgasstrang 4 einzuspritzen. Dabei ist die Einspritzeinrichtung 6 am Abgasstrang 4 stromauf der Abgasbehandlungseinrichtung 5 angeordnet. Beim flüssigen Edukt kann es sich vorzugsweise um Kraftstoff handeln, insbesondere um denselben Kraftstoff, mit dem auch die Brennkraftmaschine 1 betrieben wird. Ferner kann es sich beim Edukt auch um Ammoniak oder um Harnstoff bzw. um eine wässrige Harnstofflösung handeln. Sofern eine Kraftstoffinjektion vorgesehen ist, handelt es sich bei der unmittelbar stromab zur Einspritzeinrichtung 6 benachbarten Abgasbehandlungseinrichtung 5 vorzugsweise um einen Oxidationskatalysator, an dem eine Umsetzung des Kraftstoffs in Wärme erfolgt, beispielsweise um den Oxidationskatalysator auf seine Betriebstemperatur zu bringen oder um ein stromab des Oxidationskatalysator angeordnetes Partikelfilter auf eine Regenerationstemperatur aufzuheizen. Sofern die Einspritzeinrichtung 6 zum Einspritzen von Ammoniak ausgestaltet ist, kann es sich bei der Abgasbehandlungseinrichtung 5 um einen SCR-Katalysator handeln. Sofern Harnstoff oder eine Harnstoff-Wasser-Lösung eingedüst wird, kann es sich bei der unmittelbar stromab folgenden Abgasbehandlungseinrichtung 5 vorzugsweise um einen Hydrolysereaktor oder HydrolyseKatalysator handeln, in dem der Harnstoff in Ammoniak umgesetzt wird, um einen nachfolgenden SCR-Katalysator zu beaufschlagen. Ebenso kann auf die Einspritzeinrichtung 6 direkt eine als SCR-Katalysator ausgestaltete Abgasbehandlungseinrichtung 5 folgen, in der zusätzlich die Hydrolysereaktion abläuft. Darüber hinaus sind noch beliebige andere Anwendungen für die Einspritzung eines flüssigen Edukts in den Abgasstrang 4 unmittelbar stromab einer Abgasbehandlungseinrichtung 5 denkbar.

Gemäß Fig. 1 wird für die Eindüsung des Edukts eine axiale Ausrichtung des Eduktstrahls bevorzugt, was z.B. exemplarisch durch eine entsprechende Biegung im Abgasstrang 4 realisierbar ist.

Um das eingespritzte, flüssige Edukt möglichst rasch und möglichst vollständig im Abgas verdampfen zu können und um das verdampfte Edukt möglichst homogen mit dem Abgas zu vermischen, ist die Abgasanlage 3 mit einer Misch- und/oder Verdampfungseinrichtung 7 ausgestattet, die im Abgasstrang 4 stromab der Einspritzeinrichtung 6 und zweckmäßig stromauf oder unmittelbar an oder in der zur Einspritzeinrichtung 6 benachbarten Abgasbehandlungseinrichtung 5 angeordnet ist.

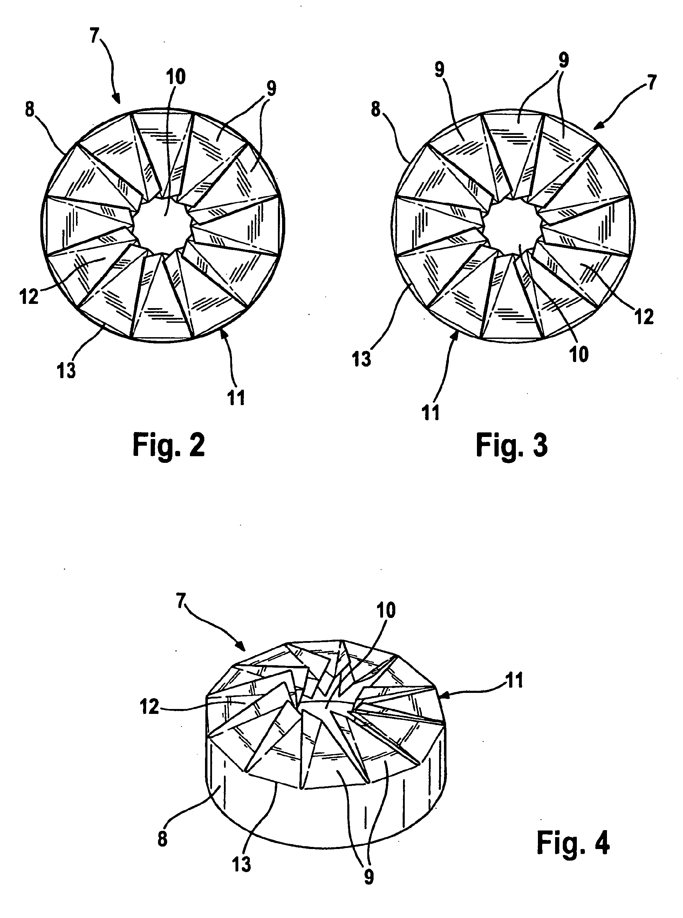

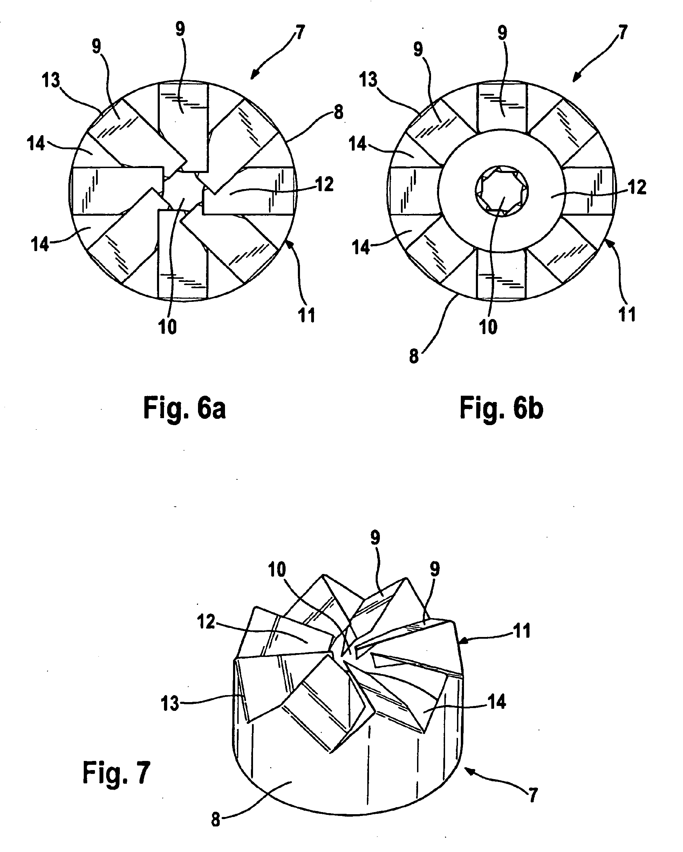

Bevorzugte Ausführungsformen der Misch- und/oder Verdampfungseinrichtung 7 werden im Folgenden mit Bezug auf die Fig. 2 bis 7 näher erläutert.

Entsprechend den Fig. 2 bis 7 umfasst eine Misch- und/oder Verdampfungseinrichtung 7 einen Rohrkörper 8, der vorzugsweise zylindrisch, insbesondere kreiszylindrisch, geformt ist. An einem seiner axialen Enden weist der Rohrkörper 8 mehrere Schaufeln 9 auf, die ebenfalls einen Bestandteil der Misch- und/oder Verdampfungseinrichtung 7 bilden. Die Schaufeln 9 sind in Umfangsrichtung zueinander benachbart angeordnet und stehen dabei vom Rohrkörper 8 radial nach innen vor. Dabei sind die Schaufeln 9 so dimensioniert, dass sie eine zentrale Durchgangsöffnung 10 freilassen. Ferner sind die Schaufeln 9 gegenüber der Axialrichtung des Rohrkörpers 8 angestellt. Das heißt, die jeweilige Schaufel 9 besitzt eine Anströmkante und eine Abströmkante, die bezüglich der Umfangsrichtung zueinander beabstandet sind. Dementsprechend besitzt die jeweilige Schaufel 9 Querschnittsprofile, deren Längsrichtung gegenüber der Axialrichtung geneigt verläuft. Durch die Anstellung der Schaufeln 9 kann die Strömung mit einem Drall beaufschlagt werden, wenn sie die Misch- und/oder Verdampfungseinrichtung 7 durchströmt.

Erfindungsgemäß ist der jeweilige Rohrkörper 8 zusammen mit allen Schaufeln 9 aus einem einzigen Blechkörper 11 hergestellt ist, und zwar durch Umformen entsprechender Bereiche dieses Blechkörpers 11. Somit handelt es sich bei der jeweiligen Misch- und/oder Verdampfungseinrichtung 7 um einen aus einem Stück hergestellten Blechformkörper.

Bei den hier gezeigten, erfindungsgemäßen Ausführungsformen sind die Schaufeln 9 so ausgestaltet und angeordnet, dass sie sich in der Umfangsrichtung gegenseitig überlappen, und zwar so, dass eine Ringfläche 12 entsteht, die in axialer Richtung blickdicht ist und dabei die zentrale Durchgangsöffnung 10 umschließt. Bei den in den Fig. 2 bis 4 gezeigten erfindungsgemäßen Ausführungsformen sind die Schaufeln 9 so ausgestaltet und angeordnet, dass sich die genannte blickdichte Ringfläche 12 radial bis zum Ringkörper 8 erstreckt. Demnach ist bei dieser Ausführungsform die blickdichte Ringfläche 12 radial innen durch die zentrale Durchgangsöffnung 10 und radial außen durch den Rohrkörper 8 begrenzt.

Um eine derartige blickdichte Ringfläche 12 auszugestalten, sind bei der erfindungsgemäßen Ausführungsform der Fig. 2 bis 4 die Schaufeln 9 radial außen an einen Übergang 13 zum Rohrkörper 8 jeweils so ausgestaltet, dass sie dort mit ihrem Querschnittsprofil in einer Ebene liegen, die sich im wesentlichen senkrecht zur Axialrichtung des Rohrkörpers 8 erstreckt. Hierdurch können sich die benachbarten Schaufeln 9 von der zentralen Durchgangsöffnung 10 bis zum Rohrkörper 8 gegenseitig überlappen. Diese gegenseitige Überlappung in axialer Richtung führt zu gewünschten Blickdichtigkeit der Ringfläche 12 in der Axialrichtung.

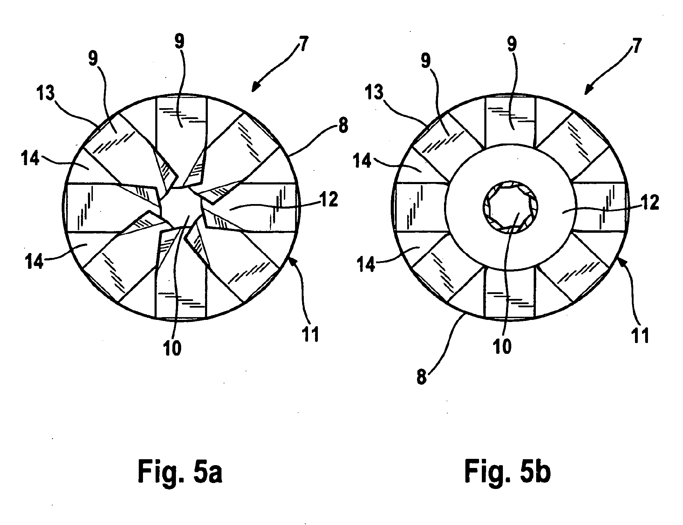

Die Fig. 5 bis 7 zeigen eine andere Ausführungsform der Misch- und/oder Verdampfungseinrichtung 7, die nicht Teil der Erfindung ist. Bei dieser Ausführungsform sind die Schaufeln 9 so angeordnet und ausgestaltet, dass radial außerhalb der blickdichten Ringfläche 12 zwischen Schaufeln 9, die in Umfangsrichtung zueinander benachbart sind, axial freie Lücken 14 entstehen. Diese Lücken 14 sind dabei in Umfangsrichtung verteilt um die blickdichte Ringfläche 12 angeordnet und erzeugen dort einen relativen Druckabfall, wodurch die Misch- und/oder Verdampfungseinrichtung 7 einen reduzierten Durchströmungswiderstand besitzt. Die in axialer Richtung blickdichte Ringfläche 12 ist hierbei radial innen im wesentlichen durch die zentrale Durchgangsöffnung 10 und radial außen durch einen weiteren Ringbereich begrenzt, der sich bis zum Rohrkörper 8 erstreckt und der die Lücken 14 enthält.

Diese Bauweise mit den axial freien Lücken 14 kann bevorzugt dadurch erreicht werden, dass die Schaufeln 9 radial außen am Übergang 13 zum Rohrkörper 8 mit ihrem jeweiligen Querschnittsprofil in einer Ebene liegen, die gegenüber einer senkrecht zur Axialrichtung verlaufenden Ebene geneigt sind. Diese Neigung kann beispielsweise zwischen 20° und 70° liegen. Im gezeigten Beispiel liegt diese Neigung vorzugsweise bei etwa 45°.

Die Schaufeln 9 können bei den Ausführungsformen der Fig. 2 bis 7 so ausgestaltet sein, dass sich ihre Anstellung gegenüber der Axialrichtung radial entlang der jeweiligen Schaufel 9 verändert. Die Veränderung der Anstellung kann dabei stufenlos erfolgen, wodurch die Schaufeln 9 eine Verwindung aufweisen. Ebenso kann die Veränderung der Anstellung in Stufen erfolgen. Hierzu können Teilbereiche innerhalb der jeweiligen Schaufeln 9 geringfügig gegenüber dem Rest der jeweiligen Schaufel 9 abgewinkelt sein. Bevorzugt ist dabei eine Ausführungsform, bei welcher die Anstellung der Schaufeln 9 entlang der Schaufel 9 radial von außen nach innen abnimmt. Im Idealfall sind die Schaufeln 9 radial innen, also am Übergang zur zentralen Durchgangsöffnung 10 nicht angestellt, wodurch sich ihr Querschnittsprofil dort im wesentlichen parallel zur Axialrichtung erstreckt. Die maximale Anstellung liegt dann radial außen im Bereich des Rohrkörpers 8 vor. Diese maximale Anstellung liegt bei der in den Fig. 5 bis 7 gezeigten Ausführungsform etwa bei 45°. Bei der in den Fig. 2 bis 4 gezeigten Ausführungsform sind die Schaufeln 9 radial außen etwa um 90° gegenüber der Axialrichtung angestellt.

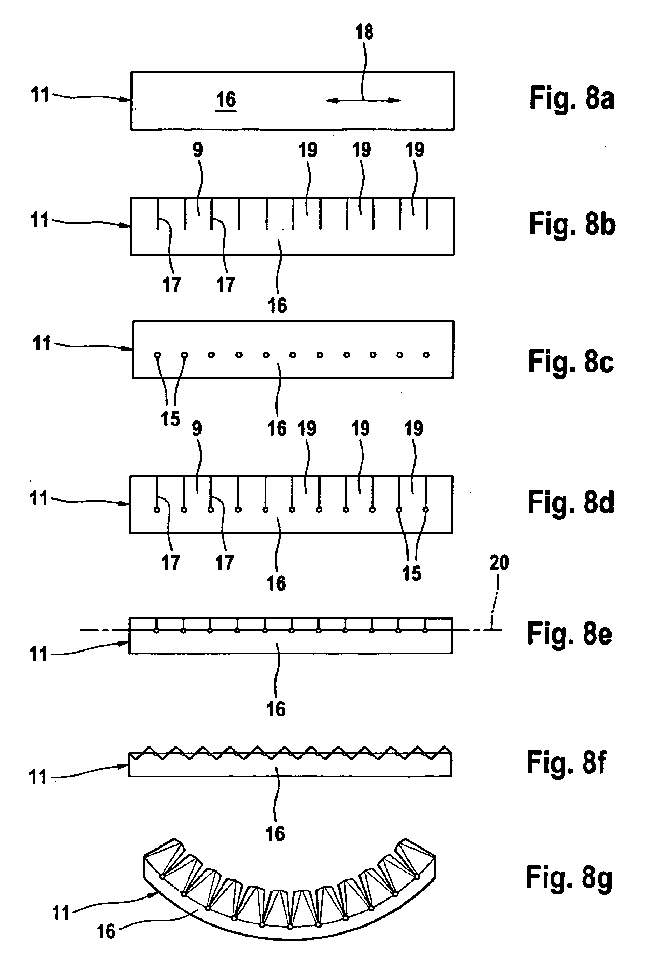

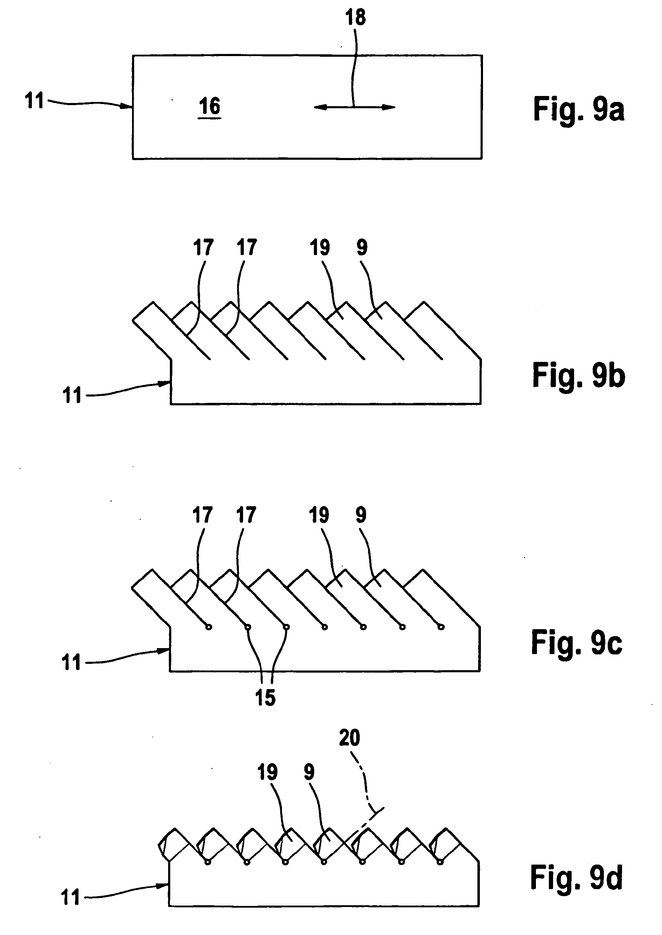

Um die Dauerfestigkeit der Misch- und/oder Verdampfungseinrichtung 7 zu erhöhen, können die einzelnen, in Umfangsrichtung zueinander benachbarten Schaufeln 9 radial außen am Übergang 13 zum Rohrkörper 8 jeweils über eine abgerundete Öffnung 15 aneinander grenzen. Diese abgerundeten Öffnungen 15 sind z. B. in den Fig. 8c, 8d und 9c sowie 9d zu erkennen. Die abgerundeten Öffnungen 15 dienen zur Reduzierung von Spannungen innerhalb des Blechkörpers 11, um die Gefahr einer Rissbildung zu reduzieren.

Im Folgenden wird anhand der Fig. 8 und 9 ein bevorzugtes Verfahren zum Herstellen der Misch- und/oder Verdampfungseinrichtung 7 näher erläutert, das nicht Teil der Erfindung ist.

Entsprechend Fig. 8a ist der Blechkörper 11, aus dem letztlich der Rohrkörper 8 und die Schaufeln 9 durch Umformung ausgebildet werden, in einem Ausgangszustand ein im wesentlichen ebener Blechstreifen 16. In diesen Blechstreifen 16 werden nun gemäß Fig. 8b Schnitte 17 eingearbeitet. Dabei werden die Schnitte 17 seitlich angesetzt, ohne dass die Schnitte 17 den Blechstreifen 16 durchdringen. Die einzelnen Schnitte 17 erstrecken sich parallel zueinander und sind gegenüber der Längsrichtung des Blechstreifens 16 geneigt. Die Längsrichtung des Blechstreifens 16 ist dabei durch die Umfangsrichtung des damit gebildeten Rohrkörpers 8 definiert. Die Längsrichtung des Blechstreifens 16 ist in Fig. 8a durch einen Doppelpfeil symbolisiert und mit 18 bezeichnet.

Anschließend können optional gemäß Fig. 8d die abgerundeten Öffnungen 15 in den Blechstreifen 16 eingearbeitet werden, derart, dass die Öffnungen 15 jeweils am Ende eines der Schnitte 17 angeordnet sind. Hierdurch kann die Gefahr einer Rissbildung am jeweiligen Schnittende reduziert werden. Alternativ ist es ebenso möglich, gemäß Fig. 8c zuerst die abgerundeten Öffnungen 15 in den Blechstreifen 16 einzuarbeiten und erst danach gemäß Fig. 8d die Schnitte 17 so einzubringen, dass diese jeweils in einer der Öffnungen 15 enden. Ebenso ist es grundsätzlich möglich, die Schnitte 17 und die Öffnungen 15 gleichzeitig, z.B. mit einem Stanzvorgang, in den Blechstreifen 16 einzubringen.

Durch die Schnitte 17 werden am Blechstreifen 16 eine Vielzahl in der Längsrichtung 18 des Blechstreifens 16 nebeneinander angeordneter Querstreifen 19 ausgebildet, die durch die Schnitte 17 voneinander getrennt sind. Diese Querstreifen 19 bilden später dann die Schaufeln 9, die durch die Schnitte 17 hier bereits voneinander vereinzelt sind. Um die in den Fig. 2 bis 4 gezeigte Ausführungsform auszubilden, werden die Schnitte 17 hier so gesetzt, dass sie sich quer zur Längsrichtung 18 des Blechstreifens 16 erstrecken.

Gemäß Fig. 8e werden die vereinzelten Schaufeln 9 bzw. die Querstreifen 9 anschließend jeweils um eine senkrecht zu den Schnitten 17 verlaufende Biegeachse 20 umgebogen, so dass sie beispielsweise rechtwinklig vom übrigen Blechstreifen 16 abstehen. Es ist klar, dass hier auch andere Biegewinkel möglich sind, die größer oder auch kleiner als 90° sein können.

Gemäß Fig. 8f können die abgewinkelten bzw. umgebogenen vereinzelten Schaufeln 9 bzw. die Querstreifen 19 mit einer variierenden Anstellung ausgestattet werden, beispielsweise werden hierzu die Schaufeln 9 kontinuierlich verwunden. Ebenso können die Schaufeln 9 durch Abkanten von jeweils wenigstens einem Teilbereich stufig mit variierender Anstellung versehen werden.

Anschließend kann gemäß Fig. 8g der Blechstreifen 16 um eine parallel zur Axialrichtung des Rohrkörpers 8 verlaufende Biegeachse gebogen bzw. aufgewickelt oder aufgerollt werden, um mit dem restlichen Blechstreifen 16 den Rohrkörper 8 auszubilden. Beispielsweise kann der Blechstreifen 16 an einem Stoß oder in einem Überlappungsbereich verschweißt werden. Ebenso sind andere Fixiertechniken denkbar. Nach dem Aufwickeln gemäß Fig. 8g liegt dann der in den Fig. 2 bis 4 gezeigte Blechkörper 11 vor.

Um die in den Fig. 5 bis 7 gezeigte Ausführungsform herstellen zu können, wird der in Fig. 9a gezeigte Blechstreifen 16 gemäß Fig. 9b so geschnitten, dass sich die Schnitte 17 weniger als 90° gegenüber der Längsrichtung 18 des Blechstreifens 16 geneigt erstrecken. Beispielsweise erstrecken sich hier die Schnitte 17 um etwa 45° gegenüber der Längsrichtung 18 geneigt. Ebenso sind auch andere Neigungswinkel, beispielsweise zwischen 20° und 70° denkbar. Durch die schrägen Schnitte 17 entsteht ein Abfall. Auch hier ist es gemäß Fig. 9c möglich, die abgerundeten Öffnungen 15 so am Blechstreifen 16 anzubringen, dass die Schnitte 17 in diesen Öffnungen 15 enden. Es ist klar, dass analog zu der Vorgehensweise gemäß der Fig. 8a bis 8g die Schnitte 17 und die Öffnungen 15 entweder gleichzeitig oder in beliebiger Reihenfolge hintereinander in den Blechstreifen 16 eingebracht werden können.

Gemäß Fig. 9d erfolgt anschließend wieder das Umbiegen der vereinzelten Querstreifen 19 bzw. Schaufeln 9, wobei jede einzelne Schaufel 9 wieder um eine Biegeachse 20 umgebogen wird, die sich quer zur Schnittrichtung erstreckt.

Bei dieser Ausführungsform besitzen die Schaufeln 9 bereits nach dem Umbiegen eine Anstellung gegenüber der Axialrichtung des Rohrkörpers 8. Weiterhin kann der Verlauf der Anstellung entlang der jeweiligen Schaufel 9 noch verändert werden, beispielsweise durch eine Verwindung oder durch eine gestufte Veränderung der Anstellung, beispielsweise durch Abkanten wenigstens eines vorbestimmten Bereichs innerhalb der Schaufeln 9. Anschließend wird auch der so gebildete Blechstreifen 16 aufgewickelt, um den Rohrkörper 8 auszubilden.

Bevorzugt sind nun in der in Fig. 1 gezeigten Abgasanlage 3 die Einspritzeinrichtung 6 und die Misch- und/oder Verdampfungseinrichtung 7 so aufeinander abgestimmt, dass ein von der Einspritzeinrichtung 6 erzeugter einstrahliger oder mehrstrahliger Eduktstrahl die Schaufeln 9 der Misch- und/oder Verdampfungseinrichtung 7 radial außerhalb der zentralen Durchgangsöffnung 10 trifft. Vorzugsweise trifft der Eduktstrahl ausschließlich innerhalb der blickdichten Ringfläche 12 auf die Schaufeln 9. Zweckmäßig erfolgt die Auslegung bzw. Anpassung so, dass der jeweilige Eduktstrahl ausschließlich außerhalb der Durchgangsöffnung 10 und/oder ausschließlich innerhalb der blickdichten Ringfläche 12 auf die Schaufeln 9 trifft.

## Patentansprüche

1. Misch- und/oder Verdampfungseinrichtung für eine Abgasanlage (3) einer Brennkraftmaschine (1), insbesondere in einem Kraftfahrzeug,
- mit einem Rohrkörper (8), an dessen einen axialen Ende mehrere, in Umfangsrichtung zueinander benachbarte Schaufeln (9) angeordnet sind, die radial nach innen vorstehen und dabei eine zentrale Durchgangsöffnung (10) freilassen,
- wobei die Schaufeln (9) gegenüber der Axialrichtung angestellt sind,
- wobei sich die Schaufeln (9) in Umfangsrichtung überlappen, derart, dass eine die zentrale Durchgangsöffnung (10) einschließende, in Axialrichtung blickdichte Ringfläche (12) entsteht, wobei die Schaufeln (9) so angeordnet und ausgestaltet sind, dass sich die blickdichte Ringfläche (12) radial bis zum Rohrkörper (8) erstreckt,
**dadurch gekennzeichnet,**
- **dass** der Rohrkörper (8) zusammen mit den Schaufeln (9) aus einem einzigen Blechkörper (11) durch Umformen hergestellt ist,
- **dass** die Schaufeln (9) radial außen am Übergang (13) zum Rohrkörper (8) mit ihrem Profil jeweils in einer Ebene liegen, die sich senkrecht zur Axialrichtung erstreckt.

2. Einrichtung nach Anspruch 1,
**dadurch gekennzeichnet,**
**dass** die in Umfangsrichtung benachbarten Schaufeln (9) radial außen am Übergang (13) zum Rohrkörper (8) jeweils über eine abgerundete Öffnung (15) aneinander grenzen.

3. Einrichtung nach einem der Ansprüche 1 und 2,
**dadurch gekennzeichnet,**
**dass** die Schaufeln (9) eine sich in radialer Richtung entlang der Schaufel (9) stufenlos oder gestuft verändernde Anstellung gegenüber der Axialrichtung aufweisen.

4. Einrichtung nach Anspruch 3,
**dadurch gekennzeichnet,**
**dass** die Anstellung entlang der jeweiligen Schaufel (9) radial von außen nach innen abnimmt.

5. Einrichtung nach einem der Ansprüche 1 bis 4,
**dadurch gekennzeichnet,**
**dass** der Blechkörper (11) ein Blechstreifen (16) ist, von dem die Schaufeln (9) durch parallele, gegenüber der Längsrichtung (18) des Blechstreifens (16) geneigte Schnitte (17) voneinander vereinzelt sind und gegenüber dem die vereinzelten Schaufeln (9) um eine senkrecht zu den Schnitten (17) verlaufende Biegeachse (20) umgebogen sind.

6. Abgasanlage für eine Brennkraftmaschine (1), insbesondere in einem Kraftfahrzeug,
- mit einem Abgas von der Brennkraftmaschine (1) abführenden Abgasstrang (4),
- mit einer am Abgasstrang (4) angeordneten Einspritzeinrichtung (6) zum Einspritzen eines flüssigen Edukts in den Abgasstrang (4),
- mit einer im Abgasstrang (4) stromab der Einspritzeinrichtung (6) angeordneten Misch- und/oder Verdampfungseinrichtung (7) nach einem der Ansprüche 1 bis 5.

7. Abgasanlage nach Anspruch 6,
**dadurch gekennzeichnet,**
**dass** die Einspritzeinrichtung (6) und die Misch- und/oder Verdampfungseinrichtung (7) so aufeinander abgestimmt sind, dass die Einspritzeinrichtung (6) einen Eduktstrahl erzeugt, der die Schaufeln (9) radial außerhalb der zentralen Durchgangsöffnung (10) trifft.

8. Abgasanlage nach Anspruch 6 oder 7,
**dadurch gekennzeichnet,**
**dass** die Einspritzeinrichtung (6) und die Misch- und/oder Verdampfungseinrichtung (7) so aufeinander abgestimmt sind, dass die Einspritzeinrichtung (6) einen Eduktstrahl erzeugt, der die Schaufeln (9) innerhalb der blickdichten Ringfläche (12) trifft.

## Claims

1. A mixing and/or evaporation device for an exhaust system (3) of a combustion engine (1), in particular in a motor vehicle,
- with a tubular body (8), on whose one axial end a plurality of blades (9) adjacent to one another in circumferential direction are arranged, which protrude radially to the inside and thereby expose a central passage opening (10),
- wherein the blades (9) are angled relative to the axial direction,
- wherein the blades (9) overlap one another in circumferential direction in such a manner that an annular area (12) which is opaque in axial direction and encloses the central passage opening (10) is created,
- wherein the blades (9) are so arranged and configured that the opaque annular area (12) radially extends as far as to the tubular body (8),
**characterized**
- **in that** the tubular body (8) together with the blades (9) is produced from a single sheet metal body (11) through forming,
- **in that** the blades (9) are radially located outside at the transition (13) to the tubular body (8) with their profile in each case in a plane, which extends perpendicularly to the axial direction.

2. The device according to Claim 1, **characterized in that** the blades (9) adjacent in circumferential direction adjoin one another radially outside on the transition (13) to the tubular body (8) in each case via a rounded opening (15).

3. The device according to any one of the Claims 1 and 2, **characterized in that** the blades (9) have an angulation which in radial direction along the blade (9) changes against the axial direction in a stepless or stepped manner.

4. The device according to Claim 3, **characterized in that** the angulation along the respective blade (9) radially decreases from the outside to the inside.

5. The device according to any one of the Claims 1 to 4, **characterized in that** the sheet metal body (11) is a sheet metal strip (16), from which the blades (9) are singled-out from one another through parallel cuts (17) which slope relative to the longitudinal direction (18) of the sheet metal strip and relative to which the singled-out blades (9) are bent over about a bending axis (20) running perpendicularly to the cuts (17).

6. An exhaust system for a combustion engine (1), in particular in a motor vehicle,
- with an exhaust line (4) discharging exhaust gas from the combustion engine (1),
- with an injection device (6) arranged on the exhaust line (4) for injecting a liquid educt into the exhaust line (4),
- with a mixing and/or evaporation device (7) according to any one of the Claims 1 to 5, which arranged in the exhaust line (5) downstream of the injection device (6).

7. The exhaust system according to Claim 6, **characterized in that** the injection device (6) and the mixing and/or evaporation device (7) are so matched to each other that the injection device (6) generates an educt jet which strikes the blades (9) radially outside the central passage opening (10).

8. The exhaust system according to Claim 6 or 7, **characterized in that** the injection device (6) and the mixing and/or evaporation device (7) are so matched to each other that the injection device (6) generates an educt jet which strikes the blades (9) within the opaque annular area (12).

## Revendications

1. Dispositif de mélange et/ou de vaporisation pour une installation d'échappement (3) d'un moteur à combustion interne (1), en particulier sur un véhicule,
- comprenant un corps tubulaire (8), sur une extrémité axiale duquel sont disposées plusieurs ailettes (9), voisines les unes des autres dans le sens périphérique, qui dépassent radialement vers l'intérieur et libèrent alors une ouverture de passage (10) centrale,
- les ailettes (9) étant placées en face de la direction axiale,
- les ailettes (9) se chevauchant dans le sens périphérique, de telle sorte qu'il se forme la surface annulaire (12) enfermant l'ouverture de passage (10) centrale, étanche au regard dans le sens axial,
- les ailettes (9) étant disposées et conçues, de telle sorte que la surface annulaire (12) étanche au regard s'étend radialement par rapport au corps tubulaire (8),
**caractérisé**
- **en ce que** le corps tubulaire (8) est fabriqué en même temps que les ailettes (9) à partir d'un seul corps en tôle (11) par déformation,
- **en ce que** les ailettes (9) sont disposées radialement à l'extérieur sur la transition (13) par rapport au corps tubulaire (8) avec leur profil respectivement dans un plan, qui s'étend perpendiculairement à la direction axiale.

2. Dispositif selon la revendication 1,
**caractérisé**
**en ce que** les ailettes (9) voisines dans le sens périphérique sont juxtaposées radialement à l'extérieur sur la transition (13) par rapport au corps tubulaire (8) à chaque fois au moyen d'une ouverture (15) arrondie.

3. Dispositif selon l'une des revendications 1 et 2,
**caractérisé**
**en ce que** les ailettes (9) présentent une incidence par rapport à la direction axiale qui change dans le sens radial le long de l'ailette (9), sans gradation ou de façon échelonnée.

4. Dispositif selon la revendication 3,
**caractérisé**
**en ce que** l'incidence diminue le long de l'ailette (9) respective radialement de l'extérieur vers l'intérieur.

5. Dispositif selon l'une des revendications 1 à 4,
**caractérisé**
**en ce que** le corps en tôle (11) est une bande de tôle (16), de laquelle les ailettes (9) sont isolées les unes des autres par des coupes (17) parallèles, inclinées par rapport à la direction longitudinale (18) de la bande de tôle (16), et par rapport à laquelle les ailettes (9) isolées sont pliées autour d'un axe de flexion (20) agencé perpendiculairement aux coupes (17).

6. Installation d'échappement pour un moteur à combustion interne (1), en particulier sur un véhicule automobile,
- comprenant une branche d'échappement (4) évacuant les gaz brûlés du moteur à combustion interne (1),
- un dispositif d'injection (6) disposé sur la branche d'échappement (4) pour l'injection d'un éduit liquide dans la branche d'échappement (4),
- un dispositif de mélange et/ou de vaporisation (7) disposé dans la branche d'échappement (4) en aval du dispositif d'injection (6) selon l'une des revendications 1 à 5.

7. Installation d'échappement selon la revendication 6,
**caractérisée**
**en ce que** le dispositif d'injection (6) et le dispositif de mélange et/ou de vaporisation (7) sont adaptés l'un à l'autre, de telle sorte que le dispositif d'injection (6) génère un jet d'éduit, qui rencontre les ailettes (9) radialement à l'extérieur de l'ouverture de passage (10) centrale.

8. Installation d'échappement selon la revendication 6 ou 7,
**caractérisée**
**en ce que** le dispositif d'injection (6) et le dispositif de mélange et/ou de vaporisation (7) sont adaptés l'un à l'autre, de telle sorte que le dispositif d'injection (6) génère un jet d'éduit, qui rencontre les ailettes (9) à l'intérieur de la surface annulaire (12) étanche au regard.
